# EUROPEAN PATENT SPECIFICATION

(11) **EP 4 004 383 B1**
(45) Date of publication and mention of the grant of the patent: **10.04.2024**
(21) Application number: 20750760.9
(22) Date of filing: 28.07.2020
(51) Int. Cl.: F16B 5/00, E04D 3/363

(54) **BRACKET OR CLIP FOR CONNECTING SHEETS OF A COVERING TO A SUBSTRUCTURE**
KLAMMER ODER KLEMME ZUM VERBINDEN VON PLATTEN EINER ABDECKUNG FÜR EINEN UNTERBAU
SUPPORT OU ATTACHE POUR RELIER DES FEUILLES D'UN REVÊTEMENT À UNE SOUS-STRUCTURE

(30) Priority: 29.07.2019 IT 201900013254
(43) Date of publication of application: 01.06.2022
(73) Proprietor: ISCOM S.p.A., 37026 Pescantina (VR) (IT)
(72) Inventor: MENEGOLI, Mauro, 37029 San Pietro in Cariano (Verona) (IT)
(74) Representative: Feltrinelli, Secondo Andrea
(86) International application number: PCT/IB2020/057112
(87) International publication number: WO 2021/019442

(56) References cited:
- WO-A2-2006/117605
- JP-A- 2000 129 866
- US-A- 5 187 911
- US-A- 5 363 624

## Description

### TECHNICAL FIELD OF THE INVENTION

The present invention relates to a bracket or clip for connecting sheets of a covering to a substructure as well as a roofing or covering unit of building walls.

### TECHNICAL BACKGROUND

Slabs or sheets of a covering of buildings are usually fixed, for example engaged by snap to brackets or clips in turn constrained to respective substructures.

Plastic clips or brackets are often used, but the need has arisen to eliminate, as far as possible, plastic in roofing to reduce the risk of fires or limit the extension of the same.

Metal brackets or clips, e.g., in aluminium, have therefore been proposed, which also provide good support for the stresses to which they are subjected.

However, since the sheets heat up much more (even 40°C-60°C more) than the brackets and also in view of the considerably different sizes between sheets and brackets, different thermal expansion occurs between these components, resulting in high friction between metal brackets and sheets, which are also metallic, as well as an annoying noise.

JP2000129866A teaches a bracket or clip connecting sheets or slabs of a covering or coating unit which includes a main component and two covering components designed to cover protruding sections of the main component.

The covering components, as they are constrained, are subject to the thrusts of the covering sheet and could slide and come out their seat.

### OBJECTS OF THE INVENTION

An object of the present invention is to provide a new bracket or clip for connecting sheets of a covering to a substructure.

Another object of the present invention is to provide a bracket or clip as mentioned above which allows reducing the friction between sheets and bracket, as well as reducing the noise caused by any expansion of the sheets.

Another object of the present invention is to provide a bracket or clip for connecting sheets of a covering to a substructure which ensures good thermal break between sheet and substructure.

Another object of the present invention is to provide a bracket or clip which can be assembled and disassembled in a simple and quick manner.

Another object of the present invention is to provide a new roofing or covering unit for roofs or building walls.

According to one aspect of the invention a bracket or clip according to claim 1 is provided.

The dependent claims refer to preferred and advantageous embodiments of the invention.

### BRIEF DESCRIPTION OF THE DRAWINGS

Other features and advantages of the invention will be more apparent from the description of an embodiment of a bracket and a unit, illustrated by way of example in the accompanying drawings, in which:

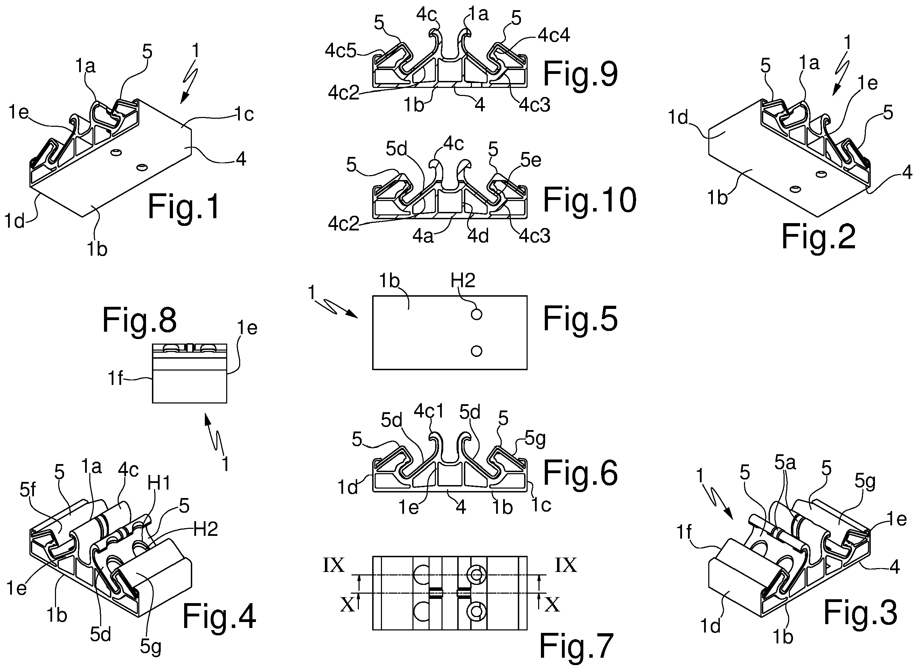

- figures 1 to 8 are perspective, bottom, front, top and side views, respectively, of a bracket or clip according to the present invention,
- figures 9 and 10 are section views taken along the lines IX-IX and X-X of figure 7,

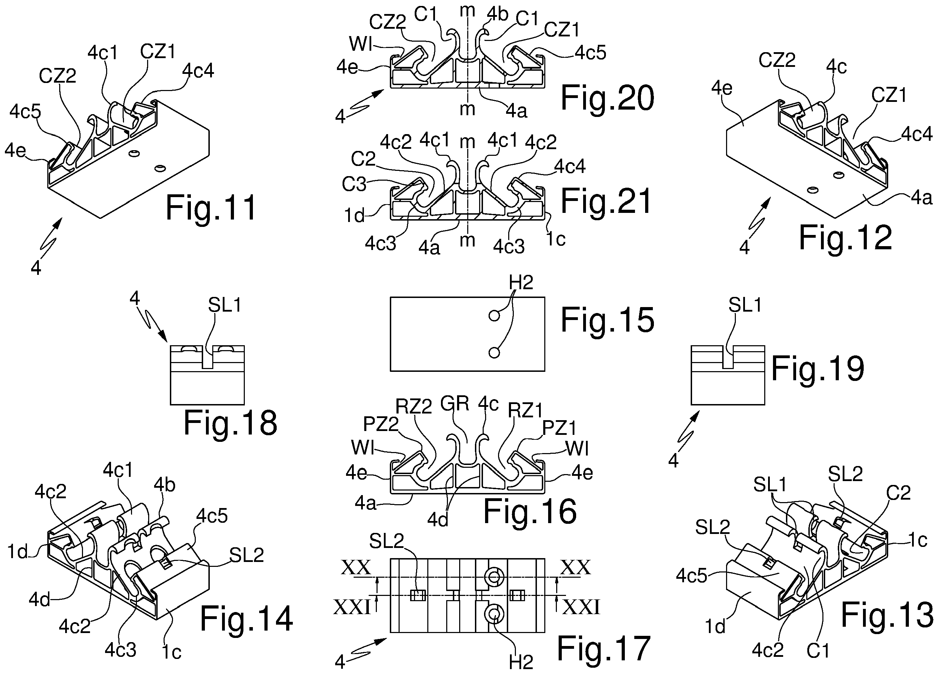

- figures 11 to 19 are similar views, respectively, to figures 1 to 8 of the bracket of the latter figures without covering components,
- figures 20 and 21 are section views taken along the lines XX-XX and XXI-XXI of figure 17,

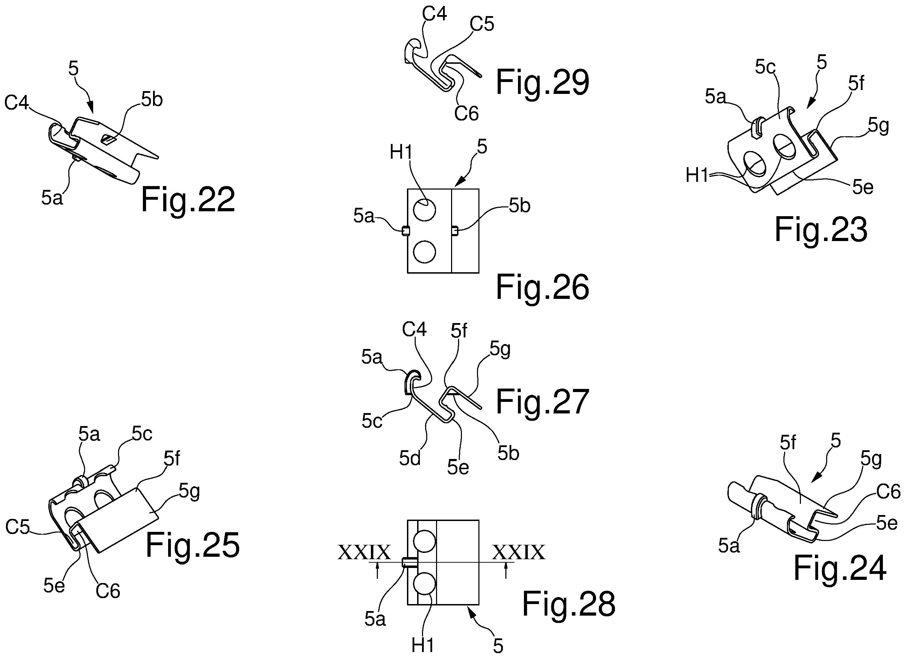

- figures 22 to 28 are perspective, bottom, top and side views, respectively, of a covering component for a bracket or clip according to the present invention,
- figure 29 is a section view taken along to the line XXIX-XXIX of figure 28,
- figure 30 is a perspective view of an assembly step of the bracket of figure 1,
- figures 31 to 40 show steps of an assembly sequence of the bracket of figure 1,

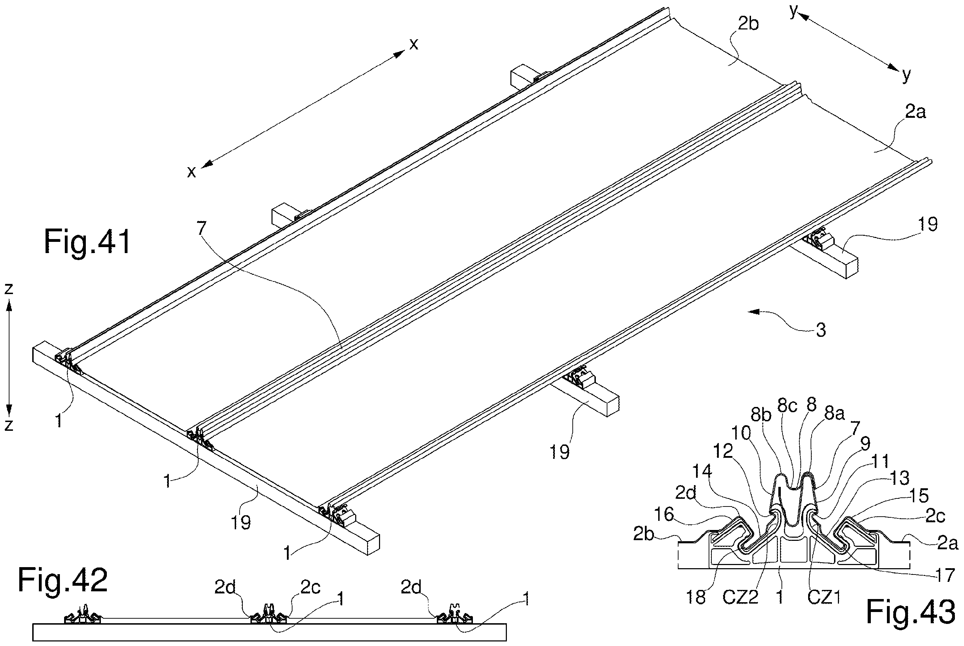

- figure 41 is a perspective view slightly from above of a roofing or covering unit according to the present invention,
- figure 42 is a side view of the unit of figure 41, and
- figure 43 is a view on an enlarged scale of a detail of figure 42.

In the accompanying drawings, identical parts or components are distinguished by the same reference numerals.

### EMBODIMENTS OF THE INVENTION

With reference to the attached figures, a bracket or clip 1 for connecting slabs or sheets 2a, 2b of a roofing or covering unit 3 for roofs or walls, such as facades of buildings, to a substructure has been shown, which bracket 1 comprises a main component 4 made of metal, for example aluminium, if desired extruded. Preferably, the main component 4 is in one piece or enbloc.

The bracket 1 has a top 1a which is, in use, the part distant from the substructure and proximal to the slabs or sheets 2a, 2b, a bottom 1b, which is, in use, the part close to or in contact with the substructure, and also has flanks or sides 1c, 1d connecting the top 1a and bottom 1b.

The bracket then comprises a front 1e and a back If, i.e., the two faces or surfaces substantially orthogonal to the other bracket components described above, as well as orthogonal to the longitudinal extension of the slabs or sheets 2a, 2b or better of the overlapping ends or edges 2c, 2d thereof.

The main component 4 comprises a base section 4a designed to rest on a substructure, as well as a projecting section 4b delimiting at least one connection zone, in particular recessed and/or protruding CZ1, CZ2 for the constraint of at least one slab or sheet 2a, 2b of a covering unit or of one end of such slab or sheet 2a, 2b. Preferably, the projecting section 4b delimits at least two connection zones, in particular recessed and/or protruding CZ1, CZ2 each one for the constraint of a respective sheet 2a, 2b of a covering or an end of the same sheet 2a, 2b, so that a connection zone CZ1 is arranged to support one end of a first slab or sheet 2a and the other connection zone CZ2 is arranged to support one end of a second slab or sheet 2b coupled or connected to the end of the first slab or sheet 2a.

Moreover, the bracket or clip 1 comprises at least one covering insert or component 5 for example made of plastic or a technopolymer, such as a glass-reinforced polyamide or an acetal resin (POM), which is designed to cover all or part of the projecting section 4b at the connection zone(s) CZ1, CZ2.

The covering insert or component 5 is not made of metal.

Preferably, the covering insert or component 5 entirely covers the points or the part of the connection zones CZ1, CZ2 designed to constitute the zones or areas of support and constraint for the sheets 2a, 2b of a roofing or covering, so that the slabs or sheets 2a, 2b or respective ends do not rest on the metal part of the bracket or clip 1. Thus, the connection zone(s) CZ1/CZ2 is/are designed to support one or respective slabs or sheets 2a with interposition of the covering insert or component 5.

The covering insert or component 5 therefore constitutes a spacer between the ends of the sheets 2a, 2b and the main component 4, so as to prevent such components from coming into contact or regardless so as to limit the contact between such components. In this regard, it will be appreciated that the covering insert or component 5 could also have holes (as will be discussed below) or a lattice structure, but always in such a way as to generate a detachment zone (even a few mm or tenth of mm) between the sheets 2a, 2b and main component 4.

Preferably, the or each covering component 5 is in one piece or enbloc.

The covering component 5 has the function of eliminating or reducing the friction between the bracket 1 and slabs or sheets 2a, 2b, thus also reducing the noise resulting from the expansion of the slabs or sheets 2a, 2b as a result of the heating of the sun or the heat in the surrounding environment.

The covering insert or component 5 may also perform the function of thermal break between the substructure and sheets 2a, 2b.

The covering insert or component 5 may be between 0.2 and 10 mm in thickness, if desired between 0.5 and 3 mm. The thickness of the covering insert or component 5 is preferably constant throughout the extension thereof.

Preferably, the covering component(s) 5 is elastically yieldable, so that it can be adapted to the connection zone(s) CZ1, CZ2. Alternatively, the covering component 5 may be rigid.

Advantageously, the bracket or clip 1 comprises at least two covering components 5, each arranged to cover the projecting section 4b at a respective connection zone CZ1, CZ2, so that a covering component 5 covers, in use, a connection zone CZ1 and the other covering component 5 covers, in use, the other connection zone CZ2. Clearly, more covering components could also be provided for each connection zone CZ1, CZ2 or one for both or all of the connection zones CZ1, CZ2.

If desired, the covering component(s) 5 is/are engaged by snap in the connection zones CZ1, CZ2. Clearly, a different engagement could be provided, for example by forced insertion or even a positioning, manual or not, with subsequent constraint by means of screws, glue or adhesive. Alternatively, the covering component(s) 5 could be over-moulded on the main component 4 or better on the outer upper wall 4c of the projecting section 4b thereof. The outer upper wall 4c in use defines the top 1a of the bracket 1 or the wall which is opposite or distal from the base part 4a.

Preferably, the covering component(s) 5 constitutes a sort of lining of the projecting section 4b or surfaces thereof defining the connection zones CZ1, CZ2. In this regard, the covering component(s) 5 may be close to or in contact throughout the extension thereof with the projecting section 4b or with the surfaces thereof defining the connection zones CZ1, CZ2.

Moreover, the main component 4 or better the respective projecting section 4b and the covering component 5 may have centring or holding means in mutual position 5a, 5b, SL1, SL2, which ensure that once the covering component(s) 5 is/are mounted with the projecting section 4b, such components do not undergo relative displacement as a result of, for example, the thermal expansion of the slabs or sheets 2a, 2b and therefore the thrust of the slabs or sheets 2a, 2b on the covering component(s) 5.

In this regard, the covering component(s) 5 may have one or more raised parts 5a, 5b designed to engage by size or by snap a groove or undercut SL1, SL2 delimited by the projecting section 4b. Alternatively or additionally, the covering component 5 could delimit one or more hollow zones for the housing by size or snap of one or more protrusions of the projecting section 4b.

If desired, the covering component 5 delimits one or more first through holes or slots H1 aligned, in use, with one or more second through holes or slots H2 delimited by the projecting section 4b for inserting screws or bolts or constraining means of sheets 2a, 2b to a substructure. In this regard, preferably, the second holes H2 are formed only on one side or in a half or in a single connection zone CZ1 of the bracket 1, since the latter has a mounting direction, in the sense that a sheet is constrained to the bracket 1 and then the latter is fixed by screws inserted into the holes H1, H2 to a substructure to then constrain a second sheet to the bracket 1.

According to the non-limiting embodiment shown in the figures, the projecting section 4b delimits one or a pair of connection zones CZ1, CZ2.

Each connection zone CZ1, CZ2 may have recessed and/or protruding zones, for example from the inside outwards or better from the centre line towards a respective side 1c, 1d, first a recessed zone RZ1, RZ2 and then a protruding zone PZ1, PZ2 or vice versa.

The covering component 5 instead has protruding areas for engaging or inserting in any recessed zones of a respective connection zone and recess areas for engaging or inserting any protruding zones of a respective connection zone.

More particularly, with reference to a plane orthogonal to the front 1e-rear 1f direction, the projecting section 4b may have at least one outer wall 4c, which from a plane (actually defined by the top 1a-bottom 1b direction and the front 1e-rear 1f direction) or centre line m-m (actually parallel to the top 1a-bottom 1b direction) or from an intermediate zone between the two sides 1c, 1d and towards a first side 1c has a middle or hook-shaped portion 4c1 delimiting a first concavity C1 facing towards such first side 1c, a first portion 4c2 approaching the base section 4a, the first portion 4c2 is inclined with respect to the direction from one side 1c to the other 1d and is straight or slightly curved, a first curved or U-shaped portion 4c3 defining a second concavity C2 facing towards the respective hook-shaped portion 4c1 and away from the first side 1c, a second curved or U-shaped portion 4c4 defining a third concavity C3 facing away from the hook-shaped portion 4c1 and towards the first side 1c and a second portion 4c5 approaching the base section 4a, also inclined with respect to the direction from one side 1c to the other 1d and straight or slightly curved, which second portion 4c5 opens or ends at the first side 1c of the bracket 1.

With reference to the expression approaching the base section 4a, it indicates that the first portion 4c2 and the second portion 4c5 have the respective end proximal to the centre plane m-m of the bracket 1 which is at a greater distance from the base section 4a with respect to the distance from the latter of the distal end thereof from the centre line m-m, so that the first 4c2 and the second 4c5 approach the base section in the passage from the proximal end to the distal end.

If desired, the first section 4c2 and the second section 4c5 on one side of the main component 4, i.e. between the centre plane m-m or intermediate zone and the first side 1c, are parallel to each other.

The hook-shaped section 4c1 may have free ends at a greater height or distance from the base section 1a with respect to the other components of the outer upper wall 4c.

With respect to the first curved or U-shaped portion 4c3, the second concavity C2 defined therein may be slightly inclined upwards or directed away from the base section 4a.

Referring now to the third concavity C3, it may be slightly inclined downwards or facing the base section 4a.

Preferably, the configuration described above is provided by a centre plane m-m or an intermediate zone both towards the first 1c and towards the second 1d side of the bracket 1. Even more preferably, a bracket 1 is symmetrical with respect to a centre plane or intermediate zone.

In this regard, in addition to that which is described above starting from the centre plane or from an intermediate zone between the two sides 1c, 1d and towards the second side 1d a middle or hook-shaped portion 4c1 is provided delimiting a first concavity C1 facing towards such second side 1d and away from the other middle or hook-shaped portion 4c1, a first portion 4c2 approaching the base section 4a, which first portion 4c2 is inclined with respect to the direction from one side 1c to the other 1d and straight or slightly curved, a first curved or U-shaped portion 4c3 defining a second concavity C2 facing towards the respective hook-shaped portion 4c1 and away from the second side 1d, a second curved or U-shaped portion 4c4 defining a third concavity C3 facing away from the middle or hook-shaped portion 4c1 and towards the second side and a second portion 4c5 approaching the base section 4a, also inclined with respect to the direction from one side 1c to the other 1d and straight or slightly curved, which second portion 4c5 opens or ends at the second side 1d of the bracket 1.

In such a case, a groove GR may be delimited between the two hook-shaped portions 4c1, which is not through from the top 1a to the bottom 1b of the bracket 1.

Clearly, the projecting part 4b may have a substantially hollow configuration in the direction from the front 1e to the rear 1f, and thus intermediate walls 4d of bridge connection between the base section 4a and the outer upper wall 4c may be provided. The intermediate walls 4d may for example be arranged lying or not lying parallel to the front 1e - back 1f direction.

The projecting part 4b may then include a pair of outer side walls 4e, each defining a respective side 1c, 1d and rising from a respective side of the base section 4a.

One or both of the outer side walls 4e may have a free, if desired L-shaped end, wrapping the outer upper wall 4c or better the terminal end of the second inclined portion 4c5 so as to define a window WI with the latter.

In essence, each connection zone CZ1, CZ2 is defined by respective portions 4c1-4c5 or concavities C1 and C2 and windows WI defined thereby.

As far as the covering component 5 is concerned, it has a shaped configuration so as to be housable or positionable, for example by snap or by forced insertion or by over-moulding within one or two connection zones CZ1, CZ2. As indicated above, preferably two covering components 5 are provided, each housable, for example by snap or forced insertion or over-moulding or otherwise within a respective connection zone CZ1, CZ2.

According to the non-limiting embodiment illustrated in the figures, the or a covering component 5 may include, from one side to the other, a terminal segment, for example curved 5c fitted or fittable within the first concavity C1 defined by a middle or hook-shaped portion 4c1, a first segment 5d, if desired flat or slightly curved, arranged or housed flush and substantially parallel to the first portion 4c2, a first curved or U-shaped intermediate segment 5e fitted or fittable within the second concavity C2 defined by the first curved or U-shaped portion 4c3, a second curved or U-shaped intermediate segment 5f placed or wrapped around the second curved or U-shaped portion 4c4 and a second flat segment 5g arranged or housable flush and substantially parallel to the second inclined portion 4c5 and whose free end may be fitted in a respective window WI, if provided.

More particularly, the curved end segment 5c may delimit a fourth concavity C4 facing the remaining components of the covering component 5, the first curved or U-shaped intermediate segment 5e may delimit a fifth concavity C5 facing the curved end segment 5c, while the second curved or U-shaped intermediate segment 5f may delimit a sixth concavity C6 facing away from the curved end segment 5c.

If centring or holding means in mutual position 5a, 5b, SL1, SL2 are provided, then the or a covering component 5 may have a first enlarged or protruding part 5a at the curved end segment 5c fitted or fittable within a first groove SL1 delimited in the respective middle or hook-shaped portion 4c1, if desired in the middle or central position thereof. In such a case, the first groove SL1 would open upwards or at the end of the middle or hook-shaped portion 4c1 away from the base part 4a.

Alternatively or in addition to what is now indicated, the or a covering component 5 may also have a second enlarged or protruding part 5b at the second curved or U-shaped intermediate segment 5f or better in the concave part thereof, which part 5b is fitted or fittable within a second groove SL2 delimited in the second curved or U-shaped portion 4c4 or in the respective second curved or U-shaped portion 4c4, if desired in the intermediate or central position thereof. In such a case, the second groove SL2 would open upwards or at the end of the second curved or U-shaped portion 4c4 away from the base part 4a.

Clearly, if two covering components 5 are provided, then a first 5a and/or a second 5b enlarged or protruding part in one or both of the covering components and a first SL1 and/or a second SL2 groove in one or both of the connection zones CZ1, CZ2 may be provided.

Moreover, as indicated above, alternatively or in addition, the covering component 5 could delimit one or more recessed zones for the custom or snap housing of a protrusion of the projecting section 4b, the recessed zones and protrusions being arranged, for example, in the same components now indicated for the enlarged parts of the main component 4 and the grooves of the covering component 5.

Referring now to the first H1 and second H2 holes, according to the embodiment illustrated in the figures, one or two first holes H1 are provided in one or both of the covering components 5 and one or two respective second holes H2 in a single connection zone CZ1 in which such covering component 5 is to be constrained. Clearly, the second holes H2 could also be provided in both connection zones CZ1, CZ2, although then only those in a connection zone would be used for the insertion of screws or bolts or means of constraining sheets 2a, 2b to a substructure.

According to the non-limiting embodiment shown in the figures, the first hole(s) H1 is/are provided in the curved end segment 5c and/or in the first segment 5d, while the second hole(s) H2 is/are provided in the first approach portion 4c2.

Advantageously, the main component 4 could have a configuration as described above which is constant in the front 1e-rear 1f direction, with the exception of any centring or holding means SL1, SL2 and any holes H2.

Preferably, the or each covering component 5 could have a configuration as described above which is constant in the front 1e-rear 1f direction, with the exception of any centring or holding means 5a, 5b and any holes H1.

According to the present invention a roofing or covering unit 3 of building walls, for example a roof or a vertical wall, is provided.

The unit 3 comprises a plurality of brackets or clips 1 according to the present invention as well as a plurality of slabs or sheets 2a, 2b.

Pairs of adjacent sheets 2a, 2b are constrained at a bracket 1 or a plurality of brackets 1 aligned with the end 2c of a first sheet 2a of a pair being constrained, for example housed, if desired by snap within a first connection zone CZ1 of a first bracket 1 or each bracket by interposing the one or a covering component 5 and the end 2d of a second sheet 2b of a pair being constrained, for example housed, by snap within a second connection zone CZ1 of the first bracket or of each bracket by interposing the one or another covering components 5.

Clearly, pairs of adjacent slabs 2a, 2b have respective ends 2c, 2d overlapping.

More particularly, two adjacent sheets or slabs 2a, 2b comprise respective overlapping or jointed ends 2c, 2d, which sheets or slabs 2a, 2b are fixable to the roof surface or to a wall to be roofed or covered by one or a plurality of brackets 1.

In this regard, the cover or wall roofing or covering typically comprises a plurality of sheets and thus a plurality of overlapping or jointed edges or ends 2c, 2d of adjacent slabs or sheets 2a, 2b, which will be arranged aligned in rows and spaced at regular intervals.

The number of rows of jointed edges or ends 2c, 2d required to realize a cover or covering of a certain roof or surface obviously depends on the size of the roof or wall and the particular characteristics thereof.

The jointed ends 2c, 2d comprise a first end or a first side edge 2c of a first sheet 2a and a second end or a second side edge 2d of another or second sheet 2b adjacent and subsequent to the first.

Preferably, the first sheet 2a and the second sheet 2b are couplable, with the respective first side edge 2c and the second side edge 2d, to one or more support brackets 1 so as to realize a continuous surface.

More particularly, the roofing or covering unit 3 normally comprises a plurality of brackets 1 arranged in rows and spaced at regular intervals, each row of brackets being arranged to support edges of respective pairs of slabs or sheets 2a, 2b.

The number of rows of brackets 1 required to realize a roofing or covering obviously depends on the size of the roof itself and the particular characteristics thereof.

The sheet 2a, 2b or the coupled or overlapping ends or side edges 2c, 2d of adjacent sheets 2a, 2b preferably define ribs or ribbings 7 with an extension longitudinal or parallel to the front 1e-rear 1f direction of the brackets 1 and thus of the unit 3.

Moreover, the sheets 2a, 2b could all be the same and each have a first end 2c arranged to engage or overlap a second end 2d of a first adjacent sheet and (have) another end 2d configured as the second end 2d of a first adjacent sheet engaged by the first end 2c thereof and arranged to be overlapped by a first end 2c of a second adjacent sheet.

To define the configuration of such ribs 7, the first direction x-x will be considered as the longitudinal direction of extension of the sheet 2a, 2b or of the coupled or overlapping lateral edges 2c, 2d of two sheets 2a, 2b, the second direction y-y, which is orthogonal to the first direction, the direction from one side to the other of the rib 7, and the third direction z-z, the direction orthogonal to the first x-x and the second y-y direction and going from the top of the rib 7 towards the base of the same connected to the remaining parts of the panels 2a, 2b.

Therefore, a rib 7 has a front or cross section taken along a plane orthogonal to the first direction x-x and in which lie the second y-y and the third z-z direction, constant along the entire longitudinal extension of the sheets 2a, 2b or along the first direction x-x.

The front or cross section of the outer surface of a rib 7, i.e., the surface facing away from the wall to be covered, starting from the centre line and towards each side has a top portion 8, from which a first part 9, 10 branches off towards the base, if desired slightly curved or substantially flat, for example slightly inclined with respect to a plane in which the first x-x and the third z-z direction lie.

In use, the third direction z-z corresponds to the direction from the top 1a to the bottom 1b of a bracket 1, the second direction y-y corresponds to the direction from one side 1c to the other 1d of a bracket 1, while the first direction x-x corresponds to the direction from the front 1e to the back 1f of a bracket 1.

Moreover, the top portion 8 could be curved with concavity facing the base, or have two curved parts 8a, 8b with concavity facing the base delimiting a recessed part 8c therebetween.

The first part 9, 10 may end with an inner shoulder or defining a recess 11, 12.

Starting from the section defining a recess 11, 12, a second part 13, 14 may branch, for example slightly curved with a greater overall inclination with respect to a plane in which the first x-x and the third y-y direction lie, with respect to the first part 9, 10.

Continuing in a direction away from the centre line, the rib 7 may have, on both one side and on the other, an arcuate part 15, 16 defining with the second part 13, 14 a recessed zone 17, 18.

Clearly, the rib 7 could also not be symmetrical with respect to a plane passing through the first x-x and the third y-y direction.

As will be appreciated, the conformations respectively of the end portion of the side edges 2c, 2d could be such as to provide an accurate overlapping between the parts, which ensures a continuous covering surface so as to avoid the penetration of water or foreign bodies.

As already mentioned, a roofing or covering according to the present invention may consist of a plurality of first sheets 2a and second sheets 2b, of predetermined length, coupled at the respective ends 2c, 2d to brackets 1 positioned in one or more rows and regularly spaced with each other, to obtain a continuous surface.

In this regard, part of an end 2c of a first sheet 2a may be partially housed and constrained, for example by snap or by forced insertion into a first connection zone CZ1 of a bracket or a plurality of aligned brackets and part of an end 2d of a second sheet 2b adjacent and constrained to the end 2c of the first sheet 2a is housed and constrained, for example by snap or by forced insertion into a connection zone CZ2 of the bracket 1 or a plurality of aligned brackets.

With regard to this aspect, with reference to the non-limiting embodiment shown in the figures, the top portion 8 actually wraps the middle or hook-shaped portions 4c1 and the latter engage, preferably with interposition of the covering component(s) 5, in the inner shoulders or grooves 11, 12 of the first parts 9, 10.

The second part 13, 14 is instead flush and, if desired contacting directly or with interposition of the covering component(s) 5 with the first approach portions 4c2, while the arcuate parts 15, 16 wrap, preferably with interposition of the covering component(s) 5, the second curved or U-shaped portions 4c4 and the second approach portions 4c5 with the recessed zones 17, 18 housed, preferably with interposition of the covering component(s) 5, in the second concavities C2.

Thus, the roofing or covering comprises, in a preferred embodiment, a plurality of brackets 1 arranged in rows and equally spaced to each other, and a plurality of first and second sheets 2a, 2b alternately coupled to brackets 1.

Naturally, the dimensions of the sheets 2a, 2b and the number thereof can be any in relation to the specific application needs.

The assembly of a bracket 1 according to the present invention is very simple and provides for the realization of a main component 4 and one or more covering components 5.

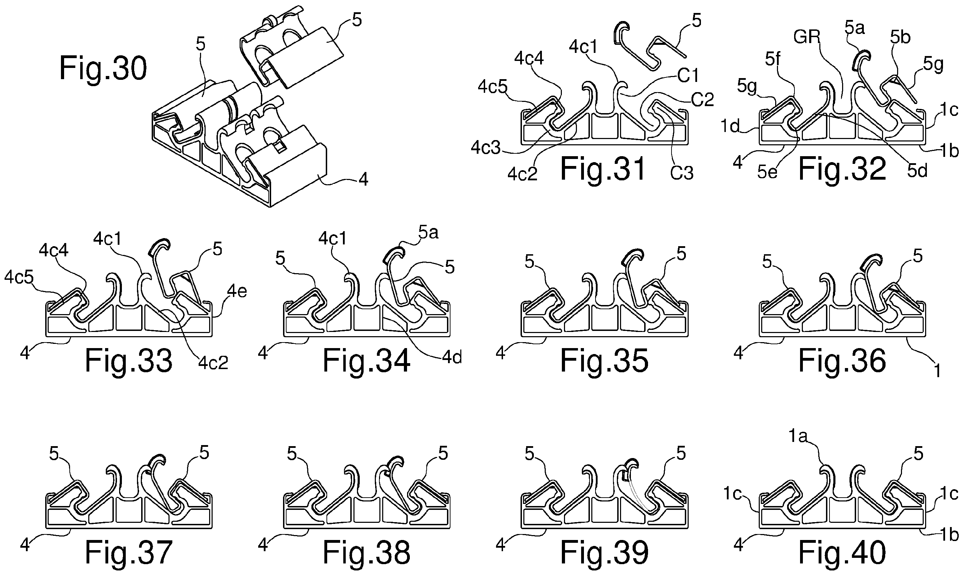

Next, the covering component(s) 5 is/are mounted by inserting respective parts into one or a respective connection zone CZ1, CZ2. Such an operation may be performed, for example, as illustrated between figures 30 and 39.

For the mounting instead of a unit 3 according to the present invention, brackets 1, slabs or sheets 2a, 2b and, if desired, strips 19 are instead realized.

Subsequently, the brackets 1 are attached to the substructure, if desired on the strips 19 in turn constrained, by means of screws or bolts, to the substructure.

To constrain the brackets 1 to the substructure or strips 19, screws or bolts are inserted into the first H1 and second H2 holes, thus reaching the strips 19 or the substructure.

Finally, the slabs or sheets 2a are arranged and the respective ends 2c, 2d are engaged or constrained in the connection zones CZ1, CZ2 and also to each other.

As will be appreciated, thanks to the presence of the covering component(s) it is possible to reduce the friction between the sheets and the bracket, as well as reduce the noise caused by any expansion of the sheets.

The presence of the main metal component ensures that the risks of fire spreading at the brackets are greatly reduced.

Moreover, the covering component(s) also acts as thermal insulation between the sheets 2a, 2b and substructure.

Modifications and variants of the invention are possible within the scope of protection defined by the claims.

## Claims

1. Bracket or clip for connecting slabs or sheets (2a, 2b) of a roofing or covering unit (3) for roofs or building walls to a substructure, comprising a main component (4) made of metal, said main component (4) comprising a base section (4a) designed to rest on a substructure, as well as a projecting section (4b) delimiting at least one connection zone (CZ1, CZ2) for the constraint of at least one slab or sheet (2a, 2b) of a covering unit, wherein said bracket or clip comprises at least one covering insert or component (5) designed to completely or partly cover said projecting section (4b) at said at least one connection zone (CZ 1, CZ2), said at least one covering insert or component (5) entirely covering the points or the part of said at least one connection zone (CZ1, CZ2) designed to constitute the zones or areas of support and constraint for the slabs or sheets (2a, 2b) of a roofing or covering, so that the slabs or sheets (2a, 2b) or respective ends do not rest on the metal part of the bracket or clip, **characterized in that**
said at least one covering component (5) is engaged by snap in said at least one connection zone (CZ1, CZ2), and/or
said main component (4) and said at least one covering component (5) have centring or holding means in mutual position (5a, 5b, SL1, SL2).

2. Bracket or clip according to claim 1, wherein said projecting section (4b) delimits at least two connection zones (CZ1, CZ2) each one for the constraint of a respective slab or sheet (2a, 2b) of a roofing unit and wherein said bracket comprises at least two covering components (5) each one designed to cover said projecting section (4b) at a respective connection zone (CZ1, CZ2).

3. Bracket or clip according to claim 1 or 2, wherein said at least one covering component (5) is made of plastic or of a technopolymer, such as a glass-reinforced polyamide or an acetal resin (POM).

4. Bracket or clip according to any one of the preceding claims, wherein said at least one covering component (5) has at least one raised part (5a, 5b) designed to engage by snap a groove or undercut (SL1, SL2) delimited by said projecting section (4b) and/or at least one covering component (5) delimits one or more hollow zones for the housing by size or snap of one or more protrusions of the projecting section (4b).

5. Bracket or clip according to any one of the preceding claims, wherein said at least one covering component (5) delimits one or more first through holes or slots (H1) aligned, in use, with second through holes or slots (H2) delimited by said projecting section (4b) for inserting constraint screws or bolts of slabs or sheets (2a, 2b) to a substructure.

6. Bracket or clip according to claim 5, wherein the second holes or slots (H2) are formed only on one side or in a half or in a single connection zone (CZ 1) of the bracket (1).

7. Bracket or clip according to any one of the preceding claims, wherein each connection zone (CZ1, CZ2) has recessed zones (RZ1, RZ2) and/or protruding zones (PZ1, PZ2), while said at least one covering component (5) has protruding areas for engaging any recessed zones (RZ1, RZ2) of a respective connection zone (CZ 1, CZ2) and recessed areas for engaging any protruding zones (PZ1, PZ2) of a respective connection zone (CZ1, CZ2).

8. Bracket or clip according to any one of the preceding claims, wherein said projecting section (4b) has at least one outer wall (4c), which from a centre plane or line (m-m) or from an intermediate zone between the two sides (1c, 1d) of said bracket and towards a first side (1c) has a middle or hook-shaped portion (4c1) delimiting a first concavity (C1) facing towards such first side (1c), a first portion (4c2) approaching the base section (4a), which first portion (4c2) is inclined with respect to the direction from one side (1c) to the other (1d) and is straight or slightly curved, a first curved or U-shaped portion (4c3) defining a second concavity (C2) facing towards the respective hook-shaped portion (4c1) and away from the first side (1c), a second curved or U-shaped portion (4c4) defining a third concavity (C3) facing away from the hook-shaped portion (4c1) and towards the first side (1c) and a second portion (4c5) approaching the base section (4a), also inclined with respect to the direction from one side (1c) to the other (1d) and straight or slightly curved, which second portion (4c5) opens or ends at the first side (1c) of the bracket (1).

9. Bracket or clip according to claim 8, wherein from the centre plane or from an intermediate zone between the two sides (1c, 1d) and towards the second side (1d) a middle or hook-shaped portion (4c1) is provided, delimiting a first concavity (C1) facing towards such second side (1d) and away from the other median or hook-shaped portion (4c1), a first portion (4c2) approaching the base section (4a), which first portion (4c2) is inclined with respect to the direction from one side (1c) to the other (1d) and straight or slightly curved, a first curved or U-shaped portion (4c3) defining a second concavity (C2) facing towards the respective middle or hook-shaped portion (4c1) and away from the second side (1d), a second curved or U-shaped portion (4c4) defining a third concavity (C3) facing away from the middle or hook-shaped portion (4c1) and towards the second side (1d) and a second section (4c5) approaching the base section (4a), also inclined with respect to the direction from one side (1c) to the other (1d) and straight or slightly curved, which second portion (4c5) opens or ends at the second side (1d) of the bracket.

10. Bracket or clip according to claim 8 or 9, wherein said at least one covering component (5) includes an end segment, for example curved (5c) fitted or fittable within the first concavity (C1) defined by a middle or hook-shaped portion (4c1), a first segment (5d), flat or slightly curved if desired, disposed or housed flush and substantially parallel to the first portion (4c2), a first curved or U-shaped intermediate segment (5e) fitted or fittable within the second concavity (C2) defined by the first curved or U-shaped portion (4c3), a second curved or U-shaped intermediate segment (5f) placed or wrapped around the second curved or U-shaped portion (4c4) and a second flat segment (5g) arranged or housable flush and substantially parallel to the second inclined portion (4c5).

11. Bracket or clip according to claims 4 and 10, wherein said at least one covering component (5) has a first enlarged or protruding part (5a) at the curved end segment (5c) fitted or fittable within a first groove (SL1) delimited in the middle or hook-shaped portion (4c1) or in the respective middle or hook-shaped portion (4c1), said first groove (SL1) opening upwards or at the end of the middle or hook-shaped portion (4c1) away from the base part (4a).

12. Bracket or clip according to claims 4 and 10 or according to claim 11, wherein said at least one covering component (5) has a second enlarged or protruding part (5b) at the second curved or U-shaped intermediate segment (5f) which second enlarged or protruding part (5b) is fitted or fittable within a second groove (SL2) delimited in the second curved or U-shaped portion (4c4) or in the respective second curved or U-shaped portion (4c4), said second groove (SL2) opening upwards or at the end of the second curved or U-shaped portion (4c4) away from the base part (4a).

13. Roofing or covering unit of building walls comprising a plurality of brackets or clips according to any one of the preceding claims, as well as a plurality of slabs or sheets (2a, 2b), wherein pairs of adjacent sheets (2a, 2b) are constrained at a bracket or a plurality of aligned brackets, with the end (2c) of a first sheet (2a) of a pair being constrained within said at least one connection zone (CZ1) of a first bracket or of each bracket by interposing said at least one covering component (5) and the end (2d) of a second sheet (2b) of a pair being constrained within said at least one connection zone (CZ2) of the first bracket or of each bracket by interposing said at least one covering component (5).

14. Roofing or covering unit according to claim 13, wherein the base sections (4a) of said brackets or clips rest on a substructure, and wherein said at least one covering component (5) performs the function of thermal break between the sheets (2a, 2b) and the substructure.

15. Covering insert or component for a main metal component of a bracket or clip for connecting slabs or sheets (2a, 2b) of a roofing or covering unit (3) for roofs or building walls to a substructure, said covering component (5) being made of plastic or of a technopolymer, such as a glass-reinforced polyamide or an acetal resin (POM), said covering insert or component comprising an end segment, for example curved (5c), a first segment (5d), if desired flat or slightly curved, a first curved or U-shaped intermediate segment (5e), a second curved or U-shaped intermediate segment (5f) and a second flat segment (5g), said curved end segment (5c) delimiting a fourth concavity (C4) facing towards the remaining components of the covering component (5), the first curved or U-shaped intermediate segment (5e) delimiting a fifth concavity (C5) facing towards the curved end segment (5c), while the second curved or U-shaped intermediate segment (5f) delimits a sixth concavity (C6) facing away from the curved end segment (5c).

16. Covering insert or component according to claim 15, comprising a first enlarged or protruding part (5a) at the curved end segment (5c) or a second enlarged or protruding part (5b) at the second curved or U-shaped intermediate segment (5f).

## Patentansprüche

1. Halterung oder Klammer zum Verbinden von Platten oder Blechen (2a, 2b) einer Dacheindeckungs- oder Abdeckungseinheit (3) für Dächer oder Gebäudewände mit einer Unterkonstruktion, umfassend eine Hauptkomponente (4) aus Metall, wobei die besagte Hauptkomponente (4) einen Basisabschnitt (4a) umfasst, der dazu ausgelegt ist, auf einer Unterkonstruktion aufzuliegen, sowie einen vorstehenden Abschnitt (4b), der mindestens eine Verbindungszone (CZ1, CZ2) für die Befestigung mindestens einer Platte oder Bleches (2a, 2b) einer Abdeckungseinheit begrenzt, worin die besagte Halterung oder Klammer mindestens einen Abdeckungseinsatz oder eine Abdeckungskomponente (5) umfasst, die dazu ausgelegt ist, den besagten vorstehenden Abschnitt (4b) an der besagten mindestens einen Verbindungszone (CZ1, CZ2) vollständig oder teilweise abzudecken, wobei der besagte mindestens eine Abdeckungseinsatz oder die besagte mindestens eine Abdeckungskomponente (5) die Punkte oder den Teil der besagten mindestens einen Verbindungszone (CZ1, CZ2), die dazu ausgelegt sind, die Zonen oder Bereiche der Abstützung und Befestigung für die Platten oder Bleche (2a, 2b) einer Dacheindeckung oder Abdeckung zu bilden, vollständig abdeckt, sodass die Platten oder Bleche (2a, 2b) oder die jeweiligen Enden nicht auf dem Metallteil der Halterung oder Klammer aufliegen, **dadurch gekennzeichnet, dass**
die besagte mindestens eine Abdeckungskomponente (5) durch Einrasten in die besagte mindestens eine Verbindungszone (CZ1, CZ2) in Eingriff gebracht wird, und/oder
die besagte Hauptkomponente (4) und die besagte mindestens eine Abdeckungskomponente (5) Zentrier- oder Haltemittel in gegenseitiger Position (5a, 5b, SL1, SL2) aufweisen.

2. Halterung oder Klammer nach Anspruch 1, worin der besagte vorstehende Abschnitt (4b) mindestens zwei Verbindungszonen (CZ1, CZ2) begrenzt, von denen jede für die Befestigung einer jeweiligen Platte oder Bleches (2a, 2b) einer Dacheindeckungseinheit bestimmt ist, und worin die besagte Halterung mindestens zwei Abdeckungskomponenten (5) umfasst, von denen jede dazu ausgelegt ist, den besagten vorstehenden Abschnitt (4b) an einer jeweiligen Verbindungszone (CZ1, CZ2) abzudecken.

3. Halterung oder Klammer nach Anspruch 1 oder 2, worin die besagte mindestens eine Abdeckungskomponente (5) aus Kunststoff oder aus einem Technopolymer, wie einem glasfaserverstärkten Polyamid oder einem Acetalharz (POM), hergestellt ist.

4. Halterung oder Klammer nach irgendeinem der vorangegangenen Ansprüche, worin die besagte mindestens eine Abdeckungskomponente (5) mindestens einen erhöhten Teil (5a, 5b) aufweist, der dazu ausgelegt ist, eine Nut oder Unterschneidung (SL1, SL2), die durch den besagten vorstehenden Abschnitt (4b) begrenzt wird, durch Einrasten in Eingriff zu bringen und/oder mindestens eine Abdeckungskomponente (5) eine oder mehrere Hohlzonen für die Aufnahme durch Größe oder Einrasten eines oder mehrerer Vorsprünge des vorstehenden Abschnitts (4b) begrenzt.

5. Halterung oder Klammer nach irgendeinem der vorangegangenen Ansprüche, worin die besagte mindestens eine Abdeckungskomponente (5) ein oder mehrere erste Durchgangslöcher oder -schlitze (H1) begrenzt, die bei Verwendung mit zweiten Durchgangslöchern oder - schlitzen (H2), die durch den besagten vorstehenden Abschnitt (4b) begrenzt werden, ausgerichtet sind, um Befestigungsschrauben oder -bolzen von Platten oder Blechen (2a, 2b) an einer Unterkonstruktion einzuführen.

6. Halterung oder Klammer nach Anspruch 5, worin die besagten zweiten Löcher oder Schlitze (H2) nur auf einer Seite oder in einer Hälfte oder in einer einzigen Verbindungszone (CZ1) der Halterung (1) ausgebildet sind.

7. Halterung oder Klammer nach irgendeinem der vorangegangenen Ansprüche, worin jede Verbindungszone (CZ1, CZ2) vertiefte Zonen (RZ1, RZ2) und/oder vorstehende Zonen (PZ1, PZ2) aufweist, während die besagte mindestens eine Abdeckungskomponente (5) vorstehende Bereiche zum Eingreifen in vertiefte Zonen (RZ1, RZ2) einer jeweiligen Verbindungszone (CZ1, CZ2) und vertiefte Bereiche zum Eingreifen in vorstehende Zonen (PZ1, PZ2) einer jeweiligen Verbindungszone (CZ1, CZ2) aufweist.

8. Halterung oder Klammer nach irgendeinem der vorangegangenen Ansprüche, worin der besagte vorstehende Abschnitt (4b) mindestens eine Außenwand (4c) hat, die von einer Mittelebene oder -linie (m-m) oder von einer Zwischenzone zwischen den beiden Seiten (1c, 1d) der besagten Halterung und in Richtung einer ersten Seite (1c) einen mittleren oder hakenförmigen Teilabschnitt (4c1) aufweist, der eine erste Konkavität (C1) begrenzt, die dieser ersten Seite (1c) zugewandt ist, einen ersten Teilabschnitt (4c2), der sich dem Basisabschnitt (4a) nähert, wobei der erste Teilabschnitt (4c2) in Bezug auf die Richtung von einer Seite (1c) zur anderen (1d) geneigt ist und gerade oder leicht gekrümmt ist, einen ersten gekrümmten oder U-förmigen Teilabschnitt (4c3), der eine zweite Konkavität (C2) definiert, die dem jeweiligen hakenförmigen Teilabschnitt (4c1) zugewandt und von der ersten Seite (1c) abgewandt ist, einen zweiten gekrümmten oder U-förmigen Teilabschnitt (4c4), der eine dritte Konkavität (C3) definiert, die von dem hakenförmigen Teilabschnitt (4c1) abgewandt und der ersten Seite (1c) zugewandt ist, und einen zweiten Teilabschnitt (4c5), der sich dem Basisabschnitt (4a) nähert, der ebenfalls in Bezug auf die Richtung von einer Seite (1c) zur anderen (1d) geneigt und gerade oder leicht gekrümmt ist, wobei sich der zweite Teilabschnitt (4c5) an der ersten Seite (1c) der Halterung (1) öffnet oder daran endet.

9. Halterung oder Klammer nach Anspruch 8, worin von der Mittelebene oder von einer Zwischenzone zwischen den beiden Seiten (1c, 1d) und in Richtung der zweiten Seite (1d) ein mittlerer oder hakenförmiger Teilabschnitt (4c1), der eine erste Konkavität (C1) begrenzt, die dieser zweiten Seite (1d) zugewandt und von dem anderen mittleren oder hakenförmigen Teilabschnitt (4c1) abgewandt ist, ein erster Teilabschnitt (4c2), der sich dem Basisabschnitt (4a) nähert, wobei der erste Teilabschnitt (4c2) in Bezug auf die Richtung von einer Seite (1c) zur anderen (1d) geneigt und gerade oder leicht gekrümmt ist, ein erster gekrümmter oder U-förmiger Teilabschnitt (4c3), der eine zweite Konkavität (C2) definiert, die dem jeweiligen mittleren oder hakenförmigen Teilabschnitt (4c1) zugewandt und von der zweiten Seite (1d) abgewandt ist, ein zweiter gekrümmter oder U-förmiger Teilabschnitt (4c4), der eine dritte Konkavität (C3) definiert, die von dem mittleren oder hakenförmigen Teilabschnitt (4c1) abgewandt und der zweiten Seite (1d) zugewandt ist, und ein zweiter Teilabschnitt (4c5), der sich dem Basisabschnitt (4a) nähert, der ebenfalls in Bezug auf die Richtung von einer Seite (1c) zur anderen (1d) geneigt und gerade oder leicht gekrümmt ist, wobei sich der zweite Teilabschnitt (4c5) an der zweiten Seite (1d) der Halterung öffnet oder daran endet, vorgesehen ist.

10. Halterung oder Klammer nach Anspruch 8 oder 9, worin die besagte mindestens eine Abdeckungskomponente (5) ein Endsegment, zum Beispiel ein gekrümmtes (5c), das in die erste Konkavität (C1), die durch einen mittleren oder hakenförmigen Teilabschnitt (4c1) definiert ist, eingepasst oder einpassbar ist, ein erstes Segment (5d), flach oder leicht gekrümmt nach Bedarf, das bündig und im Wesentlichen parallel zum ersten Teilabschnitt (4c2) angeordnet oder untergebracht ist, ein erstes gekrümmtes oder U-förmiges Zwischensegment (5e), das in die zweite Konkavität (C2), die durch den ersten gekrümmten oder U-förmigen Teilabschnitt (4c3) definiert ist, eingepasst oder einpassbar ist, ein zweites gekrümmtes oder U-förmiges Zwischensegment (5f), das um den zweiten gekrümmten oder U-förmigen Teilabschnitt (4c4) angeordnet oder gewickelt ist, und ein zweites flaches Segment (5g), das bündig und im Wesentlichen parallel zu dem zweiten geneigten Teilabschnitt (4c5) angeordnet oder unterbringbar ist, beinhaltet.

11. Halterung oder Klammer nach den Ansprüchen 4 und 10, worin die besagte mindestens eine Abdeckungskomponente (5) einen ersten vergrößerten oder vorstehenden Teil (5a) an dem gekrümmten Endsegment (5c) aufweist, der in eine erste Nut (SL1), die in dem mittleren oder hakenförmigen Teilabschnitt (4c1) oder in dem jeweiligen mittleren oder hakenförmigen Teilabschnitt (4c1) begrenzt ist, eingepasst oder einpassbar ist, wobei sich die besagte erste Nut (SL1) nach oben oder am Ende des mittleren oder hakenförmigen Teilabschnitts (4c1) von dem Basisteil weg (4a) öffnet.

12. Halterung oder Klammer nach den Ansprüchen 4 und 10 oder nach Anspruch 11, worin die besagte mindestens eine Abdeckungskomponente (5) einen zweiten vergrößerten oder vorstehenden Teil (5b) an dem zweiten gekrümmten oder U-förmigen Zwischensegment (5f) aufweist, wobei der zweite vergrößerte oder vorstehende Teil (5b) in eine zweite Nut (SL2), die in dem zweiten gekrümmten oder U-förmigen Teilabschnitt (4c4) oder in dem jeweiligen zweiten gekrümmten oder U-förmigen Teilabschnitt (4c4) begrenzt ist, eingepasst oder einpassbar ist, wobei sich die besagte zweite Nut (SL2) nach oben oder am Ende des zweiten gekrümmten oder U-förmigen Teilabschnitts (4c4) vom Basisteil weg (4a) öffnet.

13. Dacheindeckungs- oder Abdeckungseinheit von Gebäudewänden, umfassend eine Vielzahl von Halterungen oder Klammern nach irgendeinem der vorangegangenen Ansprüche sowie eine Vielzahl von Platten oder Blechen (2a, 2b), worin Paare von benachbarten Blechen (2a, 2b) an einer Halterung oder an einer Vielzahl von ausgerichteten Halterungen befestigt werden, wobei das Ende (2c) einer ersten Bleches (2a) eines Paares innerhalb der besagten mindestens einen Verbindungszone (CZ1) einer ersten Halterung oder jeder Halterung durch Zwischenfügung der besagten mindestens einen Abdeckungskomponente (5) befestigt wird und das Ende (2d) einer zweiten Bleches (2b) eines Paares innerhalb der besagten mindestens einen Verbindungszone (CZ2) der ersten Halterung oder jeder Halterung durch Zwischenfügung der besagten mindestens einen Abdeckungskomponente (5) befestigt wird.

14. Dacheindeckungs- oder Abdeckungseinheit nach Anspruch 13, worin die besagten Basisabschnitte (4a) der besagten Halterungen oder Klammern auf einer Unterkonstruktion aufliegen und worin die besagte mindestens eine Abdeckungskomponente (5) die Funktion der thermischen Trennung zwischen den Blechen (2a, 2b) und der Unterkonstruktion übernimmt.

15. Abdeckungseinsatz oder -komponente für eine Hauptmetallkomponente einer Halterung oder Klammer zum Verbinden von Platten oder Blechen (2a, 2b) einer Dacheindeckungs- oder Abdeckungseinheit (3) für Dächer oder Gebäudewände mit einer Unterkonstruktion, wobei die besagte Abdeckungskomponente (5) aus Kunststoff oder aus einem Technopolymer, wie einem glasfaserverstärkten Polyamid oder einem Acetalharz (POM) hergestellt ist, wobei der besagte Abdeckungseinsatz oder die besagte Abdeckungskomponente ein Endsegment, zum Beispiel gekrümmt (5c), ein erstes Segment (5d), nach Bedarf flach oder leicht gekrümmt, ein erstes gekrümmtes oder U-förmiges Zwischensegment (5e), ein zweites gekrümmtes oder U-förmiges Zwischensegment (5f) und ein zweites flaches Segment (5g) umfasst, wobei das besagte gekrümmte Endsegment (5c) eine vierte Konkavität (C4) begrenzt, die den übrigen Komponenten der Abdeckungskomponente (5) zugewandt ist, wobei das erste gekrümmte oder U-förmige Zwischensegment (5e) eine fünfte Konkavität (C5) begrenzt, die dem gekrümmten Endsegment (5c) zugewandt ist, während das zweite gekrümmte oder U-förmige Zwischensegment (5f) eine sechste Konkavität (C6) begrenzt, die von dem gekrümmten Endsegment (5c) abgewandt ist.

16. Abdeckungseinsatz oder -komponente nach Anspruch 15, umfassend einen ersten vergrößerten oder vorstehenden Teil (5a) an dem gekrümmten Endsegment (5c) oder einen zweiten vergrößerten oder vorstehenden Teil (5b) an dem zweiten gekrümmten oder U-förmigen Zwischensegment (5f).

## Revendications

1. Support ou clip pour raccorder des dalles ou plaques (2a, 2b) d'une unité de toiture ou couverture (3) pour toitures ou murs de bâtiment à une sous-structure, comprenant un composant principal (4) en métal, ledit composant principal (4) comprenant une section de base (4a) destinée à reposer sur une sous-structure, ainsi qu'une section en saillie (4b) délimitant au moins une zone de raccordement (CZ1, CZ2) pour la contrainte d'au moins une dalle ou plaque (2a, 2b) d'une unité de couverture, dans lequel ledit support ou clip comprend au moins un insert ou composant de couverture (5) conçu pour couvrir totalement ou partiellement ladite section en saillie (4b) à ladite au moins une zone de raccordement (CZ1, CZ2), ledit au moins un insert ou composant de couverture (5) couvrant entièrement les points ou la partie de ladite au moins une zone de raccordement (CZ1, CZ2) conçus pour constituer les zones ou surfaces d'appui et de contrainte des dalles ou plaques (2a, 2b) d'une toiture ou couverture, de sorte que les dalles ou plaques (2a, 2b) ou leurs extrémités respectives ne reposent pas sur la partie métallique du support ou clip, **caractérisé en ce que**
ledit au moins un composant de couverture (5) est engagé par encliquetage dans ladite au moins une zone de raccordement (CZ1, CZ2), et/ou
ledit composant principal (4) et ledit au moins un composant de couverture (5) ont des moyens de centrage ou maintien en position mutuelle (5a, 5b, SL1, SL2).

2. Support ou clip selon la revendication 1, dans lequel ladite section en saillie (4b) délimite au moins deux zones de raccordement (CZ1, CZ2), chacune pour la contrainte d'une dalle ou plaque (2a, 2b) respective d'une unité de toiture et dans laquelle ledit support comprend au moins deux composants de couverture (5) chacun conçu pour couvrir ladite section en saillie (4b) dans une zone de raccordement (CZ1, CZ2) respective.

3. Support ou clip selon la revendication 1 ou 2, dans lequel ledit au moins un composant de couverture (5) est constitué de plastique ou d'un technopolymère, tel qu'un polyamide renforcé de fibre de verre ou une résine acétal (POM).

4. Support ou clip selon l'une quelconque des revendications précédentes, dans lequel ledit au moins un composant de couverture (5) a au moins une partie surélevée (5a, 5b) destinée à engager par encliquetage une rainure ou contre-dépouille (SL1, SL2) délimitée par ladite section en saillie (4b) et/ou au moins un composant de couverture (5) délimite une ou plusieurs zones creuses pour le logement par la taille ou l'accrochage d'une ou plusieurs protubérances de la section en saillie (4b).

5. Support ou clip selon l'une quelconque des revendications précédentes, dans lequel ledit au moins un composant de couverture (5) délimite un ou plusieurs premiers trous ou fentes traversants (H1) alignés, en cours d'utilisation, avec les deuxièmes trous ou fentes traversants (H2) délimités par ladite section en saillie (4b) pour l'insertion de vis ou de boulons de contrainte de dalles ou de plaques (2a, 2b) à une sous-structure.

6. Support ou clip selon la revendication 5, dans lequel les deuxièmes trous ou fentes (H2) ne sont formés que d'un seul côté ou dans une moitié ou dans une seule zone de raccordement (CZ1) du support (1).

7. Support ou clip selon l'une quelconque des revendications précédentes, dans lequel chaque zone de raccordement (CZ1, CZ2) a des zones encastrées (RZ1, RZ2) et/ou des zones protubérantes (PZ1, PZ2), tandis que ledit au moins un composant de couverture (5) a des surfaces protubérantes pour engager des zones encastrées (RZ1, RZ2) d'une zone de raccordement (CZ1, CZ2) respective et des surfaces encastrées pour engager des zones protubérantes (PZ1, PZ2) d'une zone de raccordement (CZ1, CZ2) respective.

8. Support ou clip selon l'une quelconque des revendications précédentes, dans lequel ladite section en saillie (4b) a au moins une paroi extérieure (4c), qui, à partir d'un plan ou d'une ligne centrale (m-m) ou d'une zone intermédiaire entre les deux côtés (1c, 1d) dudit support et vers un premier côté (1c), a une portion médiane ou en forme de crochet (4c1) délimitant une première concavité (C1) orientée vers ce premier côté (1c), une première portion (4c2) se rapprochant de la section de base (4a), dont la première portion (4c2) est inclinée par rapport à la direction d'un côté (1c) à l'autre (1d) et est droite ou légèrement incurvée, une première portion incurvée ou en forme de U (4c3) définissant une deuxième concavité (C2) orientée vers la portion en forme de crochet (4c1) respective et opposée au premier côté (1c), une deuxième portion incurvée ou en forme de U (4c4) définissant une troisième concavité (C3) orienté à l'opposé de la portion en forme de crochet (4c1) et vers le premier côté (1c) et une deuxième portion (4c5) se rapprochant de la section de base (4a), également inclinée par rapport à la direction d'un côté (1c) à l'autre (1d) et droite ou légèrement incurvée, laquelle deuxième portion (4c5) s'ouvre ou se termine sur le premier côté (1c) du support (1).

9. Support ou clip selon la revendication 8, dans lequel, à partir du plan central ou d'une zone intermédiaire entre les deux côtés (1c, 1d) et vers le deuxième côté (1d), une portion médiane ou en forme de crochet (4c1) est fournie, délimitant une première concavité (C1) orientée vers ce deuxième côté (1d) et éloignée de l'autre portion médiane ou en forme de crochet (4c1), une première portion (4c2) se rapprochant de la section de base (4a), dont la première portion (4c2) est inclinée par rapport à la direction d'un côté (1c) à l'autre (1d) et droite ou légèrement incurvée, une première portion incurvée ou en forme de U (4c3) définissant une deuxième concavité (C2) orientée vers la portion médiane ou en forme de crochet (4c1) respective et à l'opposé du deuxième côté (1d), une deuxième portion incurvée ou en forme de U (4c4) définissant une troisième concavité (C3) orientée à l'opposé de la portion médiane ou en forme de crochet (4c1) et vers le deuxième côté (1d) et une deuxième section (4c5) se rapprochant de la section de base (4a), également inclinée par rapport à la direction d'un côté (1c) à l'autre (1d) et droite ou légèrement incurvée, dont la deuxième portion (4c5) s'ouvre ou se termine sur le deuxième côté (1d) du support.

10. Support ou clip selon la revendication 8 ou 9, dans lequel ledit au moins un composant de couverture (5) comprend un segment d'extrémité, par exemple incurvé (5c) monté ou pouvant être monté à l'intérieur de la première concavité (C1) définie par une portion médiane ou en forme de crochet (4c1), un premier segment (5d), plat ou légèrement incurvé si désiré, disposé ou logé au ras et sensiblement parallèle à la première portion (4c2), un premier segment intermédiaire incurvé ou en forme de U (5e) monté ou pouvant être monté à l'intérieur de la deuxième concavité (C2) définie par la première portion incurvée ou en forme de U (4c3), un deuxième segment intermédiaire incurvé ou en forme de U (5f) placé ou enroulé autour de la deuxième portion incurvée ou en forme de U (4c4) et un deuxième segment plat (5g) pouvant être disposé ou logé au ras et sensiblement parallèle à la deuxième portion inclinée (4c5).

11. Support ou clip selon les revendications 4 et 10, dans lequel ledit au moins un composant de couverture (5) a une première partie élargie ou protubérante (5a) au niveau du segment d'extrémité incurvé (5c) monté ou pouvant être monté à l'intérieur d'une première rainure (SL1) délimitée dans la portion médiane ou en forme de crochet (4c1) ou dans la portion médiane ou en forme de crochet respective (4c1), ladite première rainure (SL1) s'ouvrant vers le haut ou à l'extrémité de la portion médiane ou en forme de crochet (4c1) à l'opposé de la partie de base (4a).

12. Support ou clip selon les revendications 4 et 10 ou selon la revendication 11, dans lequel ledit au moins un composant de couverture (5) a une deuxième partie élargie ou protubérante (5b) au niveau du deuxième segment intermédiaire incurvé ou en forme de U (5f) dont la deuxième partie élargie ou protubérante (5b) est montée ou peut être montée à l'intérieur d'une deuxième rainure (SL2) délimitée dans la deuxième portion incurvée ou en forme de U (4c4) ou dans la deuxième portion incurvée ou en forme de U (4c4) respective, ladite deuxième rainure (SL2) s'ouvrant vers le haut ou à l'extrémité de la deuxième portion incurvée ou en forme de U (4c4) à l'opposé de la partie de base (4a).

13. Unité de toiture ou de couverture de murs de bâtiment comprenant une pluralité de supports ou de clips conformément à l'une quelconque des revendications précédentes, ainsi qu'une pluralité de dalles ou de plaques (2a, 2b), dans laquelle des paires de plaques adjacentes (2a, 2b) sont contraintes à un support ou à une pluralité de supports alignés, l'extrémité (2c) d'une première plaque (2a) d'une paire étant contrainte à l'intérieur de ladite au moins une zone de raccordement (CZ1) d'un premier support ou de chaque support en interposant ledit au moins un composant de couverture (5) et l'extrémité (2d) d'une deuxième plaque (2b) d'une paire étant contrainte à l'intérieur de ladite au moins une zone de raccordement (CZ2) du premier support ou de chaque support en interposant ledit au moins un composant de couverture (5) .

14. Unité de toiture ou de couverture selon la revendication 13, dans laquelle les sections de base (4a) desdits supports ou clips reposent sur une sous-structure, et dans laquelle ledit au moins un composant de couverture (5) remplit la fonction de rupture thermique entre les plaques (2a, 2b) et la sous-structure.

15. Insert ou composant de couverture pour un composant métallique principal d'un support ou clip destiné à raccorder des dalles ou des plaques (2a, 2b) d'une unité de toiture ou couverture (3) pour toits ou murs de bâtiment à une sous-structure, ledit composant de couverture (5) étant en plastique ou en technopolymère, tel qu'un polyamide renforcé de fibre de verre ou une résine acétal (POM), ledit insert ou composant de couverture comprenant un segment d'extrémité, par exemple incurvé (5c), un premier segment (5d), si désiré plat ou légèrement incurvé, un premier segment intermédiaire incurvé ou en forme de U (5e), un deuxième segment intermédiaire incurvé ou en forme de U (5f) et un deuxième segment plat (5g), ledit segment d'extrémité incurvé (5c) délimitant une quatrième concavité (C4) orientée vers les composants restants du composant de couverture (5), le premier segment intermédiaire incurvé ou en forme de U (5e) délimitant une cinquième concavité (C5) orientée vers le segment d'extrémité incurvé (5c), tandis que le deuxième segment intermédiaire incurvé ou en forme de U (5f) délimite une sixième concavité (C6) orientée à l'opposé du segment d'extrémité incurvé (5c).

16. Insert ou composant de couverture selon la revendication 15, comprenant une première partie élargie ou protubérante (5a) au niveau du segment d'extrémité incurvé (5c) ou une seconde partie élargie ou protubérante (5b) au niveau du deuxième segment intermédiaire incurvé ou en forme de U (5f).
